# EUROPÄISCHE PATENTANMELDUNG

(11) **EP 3 707 980 A1**
(43) Veröffentlichungstag der Anmeldung: **16.09.2020**
(21) Anmeldenummer: 19214379.0
(22) Anmeldetag: 09.12.2019
(51) Int. Cl.: A01B 69/04, G05B 23/02

(54) **REGELUNGSSYSTEM FÜR EINE AGRARMASCHINE**

(30) Priorität: 14.03.2019 DE 102019106522
(71) Anmelder: CLAAS E-Systems GmbH, 49201 Dissen (DE)
(72) Erfinder: Meyer zu Helligen, Lars Peter, 32139 Spenge (DE); Schoch, Bernd, 33334 Gütersloh (DE)
(74) Vertreter: CLAAS Gruppe

(57) **Zusammenfassung**

Regelungssystem für eine Agrarmaschine, wobei das Regelungssystem die Abweichung einer Regelgröße von einem Soll-Wert minimiert, wobei das Regelungssystem mit zumindest einem Sensor verbunden ist, wobei der Sensor den Ist-Wert der Regelgröße misst, wobei das Regelungssystem zumindest einen Aktor ansteuert, wobei die Steuerung des Aktors eine Wirkung auf die Regelgröße hat, wobei ein Grenzwert eine zulässige Abweichung der Regelgröße von dem Soll-Wert vorgibt, wobei das Regelungssystem einen Erwartungsbereich für die Regelgröße bestimmt, wobei das Regelungssystem eine Information an den Nutzer ausgibt, wenn der Erwartungsbereich eine größere Abweichung von dem Soll-Wert hat als den Grenzwert, wobei der Grenzwert nach der Information an den Nutzer zumindest so weit erhöht wird, dass die Abweichung des Erwartungsbereichs vom Soll-Wert kleiner ist als der Grenzwert.

## Beschreibung

### Die Erfindung betrifft ein Regelungssystem für eine Agrarmaschine

Ein Regelungssystem nimmt typischerweise einen Ist-Wert von einem Sensor auf und steuert über einen Aktor eine Regelgröße auf einen vorgegebenen Soll-Wert. In sicherheitskritischen Bereichen ist es bekannt ein Regelungssystem abzuschalten, wenn die Abweichung der Regelgröße vom Soll-Wert zu groß ist.

Aufgabe der Erfindung ist es ein Regelungssystem zu verbessern, sodass es auch bei größeren Abweichung der Regelgröße vom Soll-Wert von Nutzer sicher kontrolliert werden kann.

Gelöst wird die Aufgabe durch ein Regelungssystem für eine Agrarmaschine, wobei das Regelungssystem die Abweichung einer Regelgröße von einem Soll-Wert minimiert, wobei das Regelungssystem mit zumindest einem Sensor verbunden ist, wobei der Sensor den Ist-Wert der Regelgröße misst, wobei das Regelungssystem zumindest einen Aktor ansteuert, wobei die Steuerung des Aktors eine Wirkung auf die Regelgröße hat, wobei ein Grenzwert eine zulässige Abweichung der Regelgröße von dem Soll-Wert vorgibt, wobei das Regelungssystem einen Erwartungsbereich für die Regelgröße bestimmt, wobei das Regelungssystem eine Information an den Nutzer ausgibt, wenn der Erwartungsbereich eine größere Abweichung von dem Soll-Wert hat als den Grenzwert, wobei der Grenzwert nach der Information an den Nutzer zumindest so weit erhöht wird, dass die Abweichung des Erwartungsbereichs vom Soll-Wert kleiner ist als der Grenzwert.

Der Erwartungsbereich beschreibt einen prognostizierten Wertebereich, in dem sich der Ist-Wert der Regelgröße im Prognosezeitraum wahrscheinlich aufhalten wird. Die Größe des Prognosezeitraums kann dabei vom Anwendungsfall und den äußeren Umständen abhängen und muss während der Regelung nicht immer gleich lang sein. Durch die Bestimmung eines Erwartungsbereiches und die Ausgabe einer Information an den Nutzer, wenn der Erwartungsbereich eine größere Abweichung von dem Soll-Wert hat als den Grenzwert, ist der Nutzer in der Lage zu entscheiden ob ein manueller Eingriff geboten ist oder ob das Regelungssystem auch bei einer größeren Abweichung weiterarbeiten soll. Durch die Vorgabe eines neuen erhöhten Grenzwertes wird verhindert, dass das Regelungssystem außerhalb spezifizierter Grenzwerte oder ohne Grenzwerte arbeitet

Eine Agrarmaschine im Sinne dieser Erfindung ist unter anderem ein Feldhäcksler, ein Mähdrescher und ein Traktor.

Das Regelungssystem ist bspw. ein Lenkungssystem. Die Regelgröße ist in dem Fall die Position der Agrarmaschine und die Soll-Größe eine abzufahrende Fahrspur. In einem anderen Beispiel ist das Regelungssystem ein Geschwindkeitsregler. Die Regelgröße ist in dem Fall die Fahrgeschwindigkeit der Agrarmaschine und die Soll-größe eine, ggf. Orts- und/oder zeitabhängige, vorgegebene Soll-Fahrgeschwindigkeit.

Dem Regelungssystem stehen vorzugsweise weitere Umfeldparameter zur Verfügung. Die Umfeldparameter können während der Regelung aus weiteren mit dem Regelungssystem verbundenen Sensoren empfangen werden. Alternativ oder zusätzlich können weitere Umfeldparameter dem Regelungssystem vor oder während der Regelung von einem anderen System übermittelt werden. Bspw. können Informationen zur Umgebung von anderen Agrarmaschinen oder Drohnen an das Regelungssystem übermittelt werden. Im Fall eines Lenksystems können Umfeldparameter bspw. in Form einer Karte vorliegen.

Bei der Bestimmung des Erwartungsbereichs werden bevorzugt der aktuelle Ist-Wert, der Soll-Wert, aktuelle Abweichung des Ist-Wertes vom Soll-Wert, der Gradient der Abweichung, der Gradient des Soll-Wertes und/oder weitere Umfeldparameter berücksichtigt. Bspw. ist es im Allgemeinen bei einem Soll-Wert mit einem hohen Gradienten, bspw. einer engen Kurve einer Soll-Strecke, schwieriger die Regelgröße nachzuregeln als bei einem konstanten Soll-Wert. Der Erwartungsbereich wird dadurch größer.

In einer vorteilhaften Ausgestaltung wird der Grenzwerte nach einem vorbestimmten Ereignis wieder auf den ursprünglichen Wert eingestellt.

Durch die Rückstellung des Grenzwertes wird verhindert, dass das Regelungssystem dauerhaft mit erhöhtem Grenzwert arbeitet. Ansonsten bestünde die Gefahr, dass der Nutzer vergisst, dass der Grenzwert erhöht wurde und geht fälschlicherweise vom ursprünglichen Grenzwert aus.

In einer vorteilhaften Ausgestaltung ist das vorbestimmte Ereignis das Verlassen eines vorbestimmten begrenzten Bereichs.

Ein vorbestimmter begrenzter Bereich kann bspw. ein Feld oder ein Grundstück sein. Durch die Rückstellung des Grenzwertes beim Verlassen des vorbestimmten begrenzten Bereichs wird sichergestellt, dass die Agrarmaschine in einem neuen Bereich mit dem erhöhten Grenzwert arbeitet.

In einer alternativen Ausgestaltung ist das vorbestimmte Ereignis eine Änderung einer Arbeitssituation des Regelungssystems.

In Änderung der Arbeitssituation liegt bspw. vor, wenn eine Arbeitsmaschine vom Vorgewende ins Feld wechselt oder von der freien Fahrt in einen Arbeitsmodus wechselt.

In einer vorteilhaften Ausgestaltung wird, wenn der Erwartungsbereich eine größere Abweichung von dem Soll-Wert hat als ein Schwellwert, zusätzlich zu der Information eine Bestätigung vom Nutzer angefordert.

Der Schwellwert ist vorzugsweise größer als der nicht erhöhte Grenzwert. Hat der Erwartungsbereich eine Abweichung vom Soll-Wert, welche kleiner ist als der Schwellwert, so wird lediglich eine Information an den Nutzer ausgegeben. Ist die Abweichung des Erwartungsbereichs größer als der Schwellwert, so wird zusätzlich eine Bestätigung vom Nutzer angefordert. Durch die zusätzliche Anforderung einer Bestätigung vom Nutzer wird sichergestellt, dass der Nutzer der Erhöhung des Grenzwertes zustimmt und nicht lediglich die ausgegebene Information übersehen hat.

In einer vorteilhaften Ausgestaltung wird der Grenzwert nach der Bestätigung durch den Nutzer erhöht.

Durch die Erhöhung des Grenzwertes erst nach der Bestätigung wird sichergestellt, dass das Regelungssystem nicht zwischenzeitlich mit erhöhtem Grenzwert arbeitet, obwohl der Nutzer dies nicht möchte.

In einer alternativen Ausgestaltung wird der Grenzwert auf den Wert vor der Erhöhung zurückgesetzt wird, wenn die Bestätigung durch den Nutzer nicht innerhalb einer vorbestimmten Zeitspanne erfolgt.

Der Grenzwert wird in dieser Ausgestaltung also erhöht bevor die Bestätigung durch den Nutzer erfolgt und zurückgesetzt, wenn die Bestätigung ausbleibt. Dadurch wird sichergestellt, dass das Regelungssystem auch arbeitet, wenn der Grenzwert kurzfristig erhöht werden muss und der Nutzer die Erhöhung nicht schnell genug bestätigen kann. In einer vorteilhaften Ausgestaltung bestimmt das Regelungssystem den Erwartungsbereich während der Regelung in regelmäßigen Abständen neu.

In einer weiteren Ausgestaltung schaltet sich das Regelungssystem ab, wenn der Ist-Wert eine größere Abweichung vom Soll-Wert aufweist als den Grenzwert.

Durch die Abschaltung des Regelungssystems wird sichergestellt, dass das Regelungssystem nur in einem vom Hersteller oder Nutzer freigegebenen Bereich arbeitet.

In einer weiteren Ausgestaltung ist das Regelungssystem ein Lenksystem und der Soll-Wert beschreibt eine abzufahrende Strecke.

Für ein Lenksystem ist das erfindungsgemäße Regelungssystem besonders geeignet. Falls bei der Aktivierung des Lenksystems keine Soll-Strecke vorliegt, kann basierend auf der aktuellen Fahrtrichtung eine Gerade als Soll-Strecke angenommen werden. Als Grenzwert kann ein vorbestimmter Standardwert angenommen werden. Alternativ kann der Grenzwert als Null angenommen werden und nach der Bestimmung des Erwartungsbereichs erhöht werden. Falls eine Soll-Strecke vorliegt, diese jedoch einen größeren Abstand von der aktuellen Position der Agrarmaschine hat als dem Grenzwert, kann von dem Regelungssystem eine Zuführ-Strecke von der aktuellen Position zur Soll-Strecke bestimmt werden und diese Zuführ-Strecke als Soll-Strecke angenommen werden. Als Grenzwert kann in diesem Fall ebenfalls ein vorbestimmter Standardwert oder Null angenommen werden.

In einer vorteilhaften Ausgestaltung visualisiert das Regelungssystem dem Nutzer den Erwartungsbereich.

Durch die Visualisierung ist es dem Nutzer sehr leicht möglich einzuschätzen, ob ein Eingriff in das Regelungssystem notwendig ist. Im Falle eines Lenksystems erfolgt die Visualisierung bevorzugt auf einer Karte.

Die Erfindung betrifft ferner ein Verfahren zur Regelung einer Agrarmaschine, wobei das Verfahren die Abweichung einer Regelgröße von einem Soll-Wert minimiert, wobei zumindest ein Sensor ausgelesen wird, wobei der Sensor den Ist-Wert der Regelgröße misst, wobei zumindest ein Aktor angesteuert wird, wobei der Aktor eine Wirkung auf die Regelgröße hat, wobei ein Grenzwert eine zulässige Abweichung der Regelgröße von dem Soll-Wert vorgibt, wobei ein Erwartungsbereich für die Regelgröße bestimmt wird, wobei eine Information ausgegeben wird, wenn der Erwartungsbereich eine größere Abweichung von dem Soll-Wert hat als den Grenzwert.

Die Erfindung wird im Folgenden an Ausführungsbeispielen näher erläutert. Dabei zeigt
Fig. 1 einen Ablaufplan eines erfindungsgemäßen Verfahrens,
Fig. 2 eine Visualisierung eines Erwartungsbereichs,
Fig. 3 eine weitere Visualisierung eines Erwartungsbereichs.

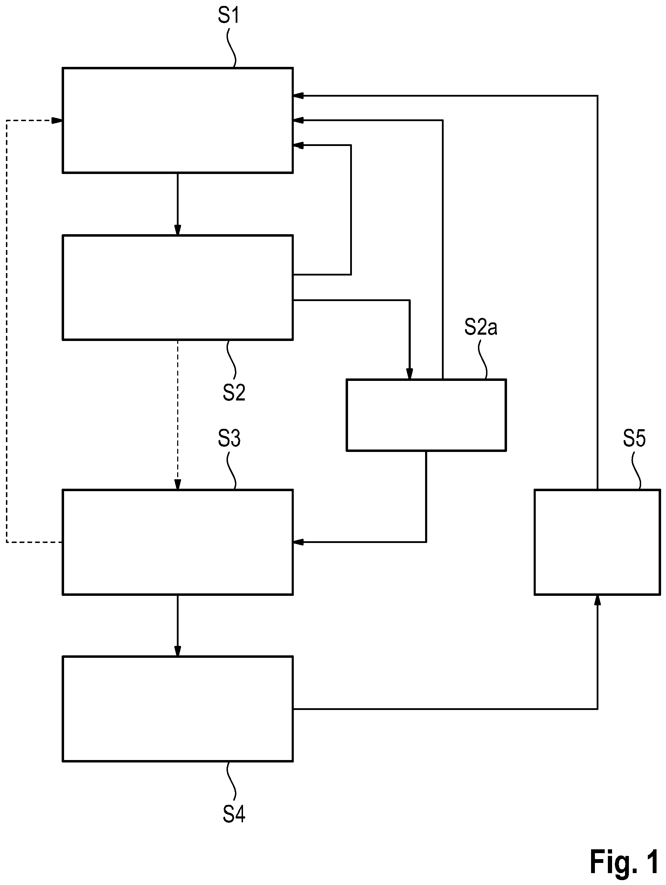

In Figur 1 ist ein Ablaufplan eines erfindungsgemäßen Verfahrens beschrieben, das von einem erfindungsgemäßen Regelungssystem ausgeführt wird. Dem Regelungssystem ist ein Soll-Wert oder eine Soll-Strecke vorgegeben und Ist-Werte von der Regelungsgröße und äußeren Parametern werden dem Regelungssystem von Sensoren zugeleitet. In einem ersten Schritt S1 wird von dem Regelungssystem ein Erwartungsbereich bestimmt. In einem zweiten Schritt S2 überprüft das Regelungssystem die Abweichung des Erwartungsbereichs von dem Soll-Wert oder der Soll-Strecke. Ist die Abweichung kleiner oder gleich groß wie ein vorgegebener Grenzwert, so ist nichts weiter zu tun bis ein neuer Erwartungsbereich bestimmt wird. Ist die Abweichung größer als der vorgegebene Grenzwert, so wird in einem dritten Schritt S3 der Grenzwert erhöht und der Nutzer über die Erhöhung informiert. Zur Information des Nutzers können einer oder mehrere Werte bzw. Bereiche aus Soll-Wert, Soll-Strecke, Erwartungsbereich, Abweichung, Grenzwert und Grenzwerterhöhung dem Nutzer visualisiert werden. Zwischen dem zweiten Schritt S2 und dem dritten Schritt S3 kann in einem optionalen Schritt S2a eine Bestätigung des Nutzers für die Grenzwerterhöhung angefordert werden. In diesem Beispiel wartet das Regelungssystem vor der Erhöhung des Grenzwertes auf die Bestätigung des Nutzers. Liegt die Bestätigung des Nutzers nicht innerhalb einer vorbestimmten Zeitspanne vor, so kehrt das Regelungssystem zum ersten Schritt S1 zurück und bestimmt einen neuen Erwartungsbereich. Nach der Erhöhung des Grenzwertes im dritten Schritt S3 kehrt das Verfahren nach einer vorbestimmten Zeitspanne zum ersten Schritt S1 zurück. In einem vierten optionalen Schritt S4 prüft das Regelungssystem ob die Erhöhung des Grenzwertes zurückgesetzt werden soll. Die Erhöhung des Grenzwertes kann bspw. nach einer vorbestimmten Zeitspanne zurückgesetzt werden. Alternativ oder zusätzlich kann die Erhöhung des Grenzwertes zurückgesetzt werden, wenn die Abweichung des Erwartungsbereichs vom Sollwert über eine zweite vorbestimmte Zeitspanne kleiner ist als der der ursprüngliche Grenzwert. Weitere vorbestimmte Ereignisse sind als Grund für das Zurücksetzen möglich. Wird im vierten Schritt S4 ein solches Ereignis erkannt, so wird in einem fünften Schritt S5 der Grenzwert zurückgesetzt und das Verfahren kehrt zum ersten Schritt S1 zurück und bestimmt einen neuen Erwartungsbereich.

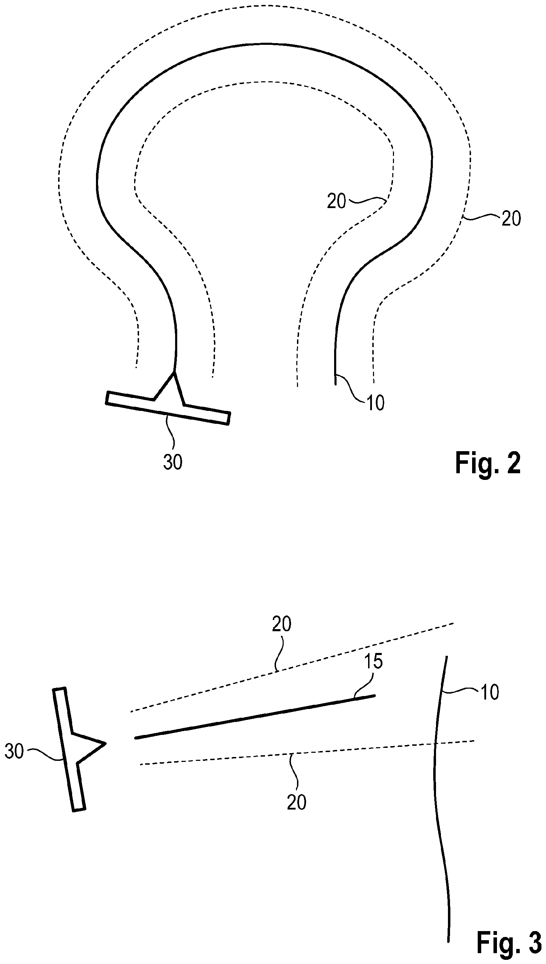

In Figur 2 ist eine Visualisierung eines Erwartungsbereichs dargestellt, wie sie vom Regelungssystem dem Nutzer gezeigt werden könnte. Der Soll-Wert 10 ist in diesem Beispiel eine Soll-Strecke, welche von der Agrarmaschine abgefahren werden soll. Der Erwartungsbereich 20 ist in diesem Fall ein Korridor, der an die Soll-Strecke 10 gebunden ist. Im Hintergrund kann eine Karte visualisiert werden, sodass der Nutzer die Abstände besser einschätzen kann. Der Grenzwert und die Abweichung des Erwartungsbereichs vom Soll-Wert können zusätzlich textuell angezeigt werden. Ebenfalls visualisert werden kann die aktuelle Position 30 der Agrarmaschine im Verhältnis zum Soll-Wert 10 und zum Erwartungsbereich 20.

In Figur 3 ist eine weitere Visualisierung eines Erwartungsbereichs dargestellt, wie sie vom Regelungssystem dem Nutzer gezeigt werden könnte. Bei der Aktivierung des Regelungssystems weist die Soll-Strecke 10 einen größeren Abstand von der aktuellen Position der Agrarmaschine auf als den Grenzwert. Das Regelungssystem bestimmt daher basierend auf der aktuellen Position und Ausrichtung der Agrarmaschine eine Gerade als Ad-Hoc-Sollstrecke 15, welche als Soll-Strecke angenommen wird. Der Erwartungsbereich 20 ist in diesem Beispiel ein Korridor, der an die Ad-Hoc-Sollstrecke 15 gebunden ist. Der Grenzwert für die Fahrt entlang der Ad-Hoc-Sollstrecke wird als Null angenommen, daher wird der Fahrer in jedem Fall über den bestimmten Erwartungsbereich informiert. Bei der Annäherung der Agrarmaschine an die Soll-Strecke 10 bestimmt das Regelungssystem eine Zuführ-Strecke. Sobald die Agrarmaschine die Soll-Strecke 10 erreicht funktioniert das Regelungssystem wie in Figur 2 beschrieben.

**Bezugszeichenliste**

| | | | |
|---|---|---|---|
| **10** | **Soll-Wert** | **S1** | **Erster Verfahrensschritt** |
| **15** | **Ad-Hoc-Sollstrecke** | **S2** | **Zweiter Verfahrensschritt** |
| **20** | **Erwartungsbereich** | **S2a** | **Optionaler Schritt** |
| **30** | **Position** | **S3** | **Dritter Verfahrensschritt** |
| | | **S4** | **Vierter Verfahrensschritt** |
| | | **S5** | **Fünfter Verfarensschritt** |

## Patentansprüche

1. Regelungssystem für eine Agrarmaschine,
wobei das Regelungssystem die Abweichung einer Regelgröße von einem Soll-Wert (10) minimiert,
wobei das Regelungssystem mit zumindest einem Sensor verbunden ist, wobei der Sensor den Ist-Wert der Regelgröße misst,
wobei das Regelungssystem zumindest einen Aktor ansteuert,
wobei die Steuerung des Aktors eine Wirkung auf die Regelgröße hat,
wobei ein Grenzwert eine zulässige Abweichung der Regelgröße von dem Soll-Wert (10) vorgibt,
**dadurch gekennzeichnet, dass** das Regelungssystem einen Erwartungsbereich (20) für die Regelgröße bestimmt (S1),
wobei das Regelungssystem eine Information an den Nutzer ausgibt, wenn der Erwartungsbereich (20) eine größere Abweichung von dem Soll-Wert (10) hat als den Grenzwert (S2),
wobei der Grenzwert nach der Information an den Nutzer zumindest so weit erhöht wird, dass die Abweichung des Erwartungsbereichs (20) vom Soll-Wert (10) kleiner ist als der Grenzwert (S3).

2. Regelungssystem nach Anspruch 1, **dadurch gekennzeichnet, dass** der Grenzwerte nach einem vorbestimmten Ereignis wieder auf den ursprünglichen Wert eingestellt wird (S5).

3. Regelungssystem nach Anspruch 2, **dadurch gekennzeichnet, dass** das vorbestimmte Ereignis das Verlassen eines vorbestimmten begrenzten Bereichs ist.

4. Regelungssystem nach Anspruch 2, **dadurch gekennzeichnet, dass** das vorbestimmte Ereignis eine Änderung einer Arbeitssituation des Regelungssystems ist

5. Regelungssystem nach einem der vorhergehenden Ansprüche, **dadurch gekennzeichnet, dass** wenn der Erwartungsbereich (20) eine größere Abweichung von dem Soll-Wert (10) hat als ein Schwellwert zusätzlich zu der Information eine Bestätigung vom Nutzer angefordert wird (S2a).

6. Regelungssystem nach Anspruch 5, **dadurch gekennzeichnet, dass** der Grenzwert nach der Bestätigung durch den Nutzer erhöht wird.

7. Regelungssystem nach Anspruch 5, **dadurch gekennzeichnet, dass** der Grenzwert auf den Wert vor der Erhöhung zurückgesetzt wird, wenn die Bestätigung durch den Nutzer nicht innerhalb einer vorbestimmten Zeitspanne erfolgt.

8. Regelungssystem nach einem der vorhergehenden Ansprüche, **dadurch gekennzeichnet, dass** das Regelungssystem den Erwartungsbereich (20) während der Regelung in regelmäßigen Abständen neu bestimmt.

9. Regelungssystem nach einem der vorhergehenden Ansprüche, **dadurch gekennzeichnet, dass** das Regelungssystem sich abschaltet, wenn der Ist-Wert eine größere Abweichung vom Soll-Wert (10) aufweist als den Grenzwert.

10. Regelungssystem nach einem der vorhergehenden Ansprüche, **dadurch gekennzeichnet, dass** das Regelungssystem ein Lenksystem ist und der Soll-Wert (10) eine abzufahrende Strecke beschreibt.

11. Regelungssystem nach einem der vorhergehenden Ansprüche, **dadurch gekennzeichnet, dass** das Regelungssystem dem Nutzer den Erwartungsbereich visualisiert.

12. Verfahren zur Regelung einer Agrarmaschine,
wobei das Verfahren die Abweichung einer Regelgröße von einem Soll-Wert (10) minimiert,
wobei zumindest ein Sensor ausgelesen wird, wobei der Sensor den Ist-Wert der Regelgröße misst,
wobei zumindest ein Aktor angesteuert wird,
wobei der Aktor eine Wirkung auf die Regelgröße hat,
wobei ein Grenzwert eine zulässige Abweichung der Regelgröße von dem Soll-Wert (10) vorgibt,
**dadurch gekennzeichnet, dass** ein Erwartungsbereich (20) für die Regelgröße bestimmt wird (S1),
wobei eine Information ausgegeben wird, wenn der Erwartungsbereich (20) eine größere Abweichung von dem Soll-Wert (10) hat als den Grenzwert (S2),
wobei der Grenzwert nach der Ausgabe der Information zumindest so weit erhöht wird, dass die Abweichung des Erwartungsbereichs vom Soll-Wert kleiner ist als der Grenzwert (S3).
